# EUROPÄISCHE PATENTANMELDUNG

(11) **EP 3 348 173 A2**
(43) Veröffentlichungstag der Anmeldung: **18.07.2018**
(21) Anmeldenummer: 18151362.3
(22) Anmeldetag: 12.01.2018
(51) Int. Cl.: A47C 31/00

(54) **SMART CHAIR**

(30) Priorität: 13.01.2017 DE 102017100595
(71) Anmelder: Palm Beach Technology LLC, West Palm Beach, FL 33401 (US)
(72) Erfinder: Ravaioli, Elio, 48015 Cervia, Ravenna (IT); Bertinato, Diego, 36071 Arzignano, Vicenza (IT)
(74) Vertreter: Manitz Finsterwald Patentanwälte PartmbB

(57) **Zusammenfassung**

Die vorliegende Erfindung betrifft ein Möbel (10) mit zumindest einer aktuatorisch manipulierbaren Komponente (24, 26, 28, 30, 34) und einem Steuergerät (50) zur Ansteuerung des zumindest einen Aktuators, wobei das Steuergerät (50) ein Befehlserkennungsmodul (52), das eingerichtet ist, verschiedene von einem Benutzer initiierte Befehlsmuster auf Entsprechungen mit vorgegebenen Befehlsmustern zu überprüfen, von denen ein jedes für ein Betätigungsmuster des zumindest einen Aktuators repräsentativ ist, und ein Befehlskonvertierungsmodul (54) umfasst, das eingerichtet ist, bei einer Entsprechung eines Befehlsmusters dasselbe in einen Steuerbefehl zur Ansteuerung des zumindest einen Aktuators umzusetzen.

## Beschreibung

Die vorliegende Erfindung betrifft ein Sitz-/Liegemöbel wie beispielsweise einen Polstersessel oder eine Sitzgruppe mit mehreren Sitzeinheiten, welches über intelligente Steuerungsfunktionen verfügt und deshalb auch als "Smart Chair" bezeichnet werden kann.

Es sind beispielsweise Polstersessel bekannt geworden, die umgangssprachlich auch als Fernsehsessel bezeichnet werden und mittels Aktuatoren manipulierbare Komponenten umfassen. Insbesondere können derartige Sessel beispielsweise aktuatorisch manipulierbare Komponenten in Form eines aktuatorisch verstellbaren Sitzteils, eines aktuatorisch verstellbaren Rückenteils, einer aktuatorisch verstellbaren Kopfstütze, einer aktuatorisch verstellbaren Fußstütze oder beispielsweise einer aktuatorisch verstellbaren Armlehne umfassen, um nur einige beispielhafte manipulierbare Komponenten derartiger Sessel zu nennen. Ferner können solche Sessel beispielsweise auch eine Massagefunktionalität aufweisen. Hierzu kann solch ein Sessel eine aktuatorisch manipulierbare Komponente, beispielsweise ein Rücken- oder ein Sitzteil aufweisen, in das entsprechende Massageaktuatoren integriert sind, mittels derer die jeweilige Komponente zu Massagezwecken bewegt und/oder in sich verformt und somit manipuliert werden kann.

Üblicherweise werden die Aktuatoren derartiger Sessel mittels einer drahtgebundenen Fernbedienung angesteuert, welche diskrete Tasten aufweist, durch deren Betätigung ein definierter Betriebs- oder Betätigungsmodus des jeweiligen Aktuators angesteuert bzw. aktiviert werden kann. Beispielsweise weist eine derartige Fernbedienung üblicherweise eine Taste, durch deren Betätigung das Rückenteil des Sessels nach hinten verschwenkt werden kann, und eine andere Taste auf, durch deren Betätigung das Rückenteil nach vorne verschwenkt werden kann. Entsprechende Tasten können auch für die unterschiedlichen Betriebs- bzw. Betätigungsmodi der Aktuatoren für die Kopfstütze, für das Sitzteil, für die Fußstütze, die Armlehnen und/oder die Massageaktuatoren vorgesehen sein.

Zwar ist der Bedienkomfort derartiger Sessel, die sich mittels einer drahtgebundenen Fernbedienung bedienen lassen, bereits besser im Vergleich zu einem Sessel, bei dem die einzelnen Komponenten händisch bzw. rein mechanisch betätigt werden müssen; nichtsdestotrotz besteht ein gewisser Verbesserungsbedarf hinsichtlich des Bedienkomforts, da der Benutzer des Sessels stets Zugriff auf die Fernbedienung haben muss, um einzelne Funktionen zu aktivieren, was insbesondere in einer Liegestellung des Sitz-/Liegemöbels schwierig sein kann, wenn die Fernbedienung aus der liegenden Position nicht oder nur schwer erreichbar ist. Ferner muss sich der Benutzer aus dem Sessel erheben, wenn er Geräte in der Umgebung des Sessels wie beispielsweise ein Klimagerät, ein Entertainmentgerät oder beispielsweise einen elektrischen Rollladen betätigen möchte, sofern hierzu keine Fernbedienung vorhanden ist, und selbst wenn, kann eine solche Fernbedienung beispielweise aus der liegenden Position nicht oder nur schwer erreichbar sein.

Der Erfindung liegt daher die Aufgabe zugrunde, ein Sitz-/Liegemöbel anzugeben, das dem Benutzer einen möglichst großen Komfort bietet.

Gemäß einem ersten Aspekt der vorliegenden Erfindung wird diese Aufgabe mit einem Sitz-/Liegemöbel wie beispielsweise einem Polstersessel oder einer Sitzgruppe mit mehreren Sitzeinheiten gelöst, das die Merkmale des Anspruchs 1 aufweist.

Insbesondere wird die der Erfindung zugrundeliegende Aufgabe gemäß dem ersten Aspekt dadurch gelöst, dass das Möbel ein Steuergerät zur Ansteuerung des zumindest einen Aktuators aufweist, wobei das Steuergerät ein Befehlserkennungsmodul und ein Befehlskonvertierungsmodul umfasst, wobei das Befehlserkennungsmodul eingerichtet ist, verschiedene von einem Benutzer initiierte Befehlsmuster auf Entsprechungen mit vorgegebenen Befehlsmustern zu überprüfen, von denen ein jedes für einen Betätigungsmodus des zumindest einen Aktuators repräsentativ ist, und wobei das Befehlskonvertierungsmodul eingerichtet ist, bei einer Entsprechung eines Befehlsmusters, die durch das Befehlserkennungsmodul erkannt wurde, das Befehlsmuster in einen Steuerbefehl zur Ansteuerung des zumindest einen Aktuators umzusetzen.

Erfindungsgemäß erfolgt die Ansteuerung der einzelnen Funktionen bzw. der jeweiligen Aktuatoren des Möbels also nicht in bekannter Art und Weise mittels einer drahtgebundenen Fernbedienung durch Betätigung diskreter Tasten; vielmehr ist es erfindungsgemäß vorgesehen, dass das Sitz-/Liegemöbel über eine Funktionalität verfügt, mittels derer die einzelnen Funktionen bzw. Aktuatoren des Möbels durch Befehlsmuster aufgerufen werden können, die von einem Benutzer initiiert werden.

Das Befehlserkennungsmodul weist eine Funktionalität auf, mittels derer die von einem Benutzer initiierten Befehlsmuster auf Entsprechungen mit vorgegebenen Befehlsmustern überprüft werden können, von denen ein jedes für einen Betätigungsmodus des zumindest einen Aktuators repräsentativ ist. Beispielsweise gibt es ein vorgegebenes Befehlsmuster, das für die Funktion "Kopfstütze zurück" repräsentativ ist, und ein anderes Befehlsmuster, das für die Funktion "Kopfstütze vor" repräsentativ ist. Beabsichtigt der Benutzer beispielsweise die Funktion "Kopfstütze zurück" aufzurufen, so muss er hierzu lediglich das entsprechende Befehlsmuster initiieren. Entspricht hierbei das vom Benutzer initiierte Befehlsmuster dem vorgegebenen Befehlsmuster für die Funktion "Kopfstütze zurück", so wird diese Entsprechung von dem Befehlserkennungsmodul erkannt, woraufhin das Befehlskonvertierungsmodul das Befehlsmuster in einen entsprechenden Steuerbefehl umsetzen kann, durch den der Aktuator zur Verstellung der Kopfstütze angesteuert wird, um die Kopfstütze nach hinten zu verstellen. Entspricht hingegen das vom Benutzer initiierte Befehlsmuster nicht dem vorgegebenen Befehlsmuster für die Funktion "Kopfstütze zurück", so setzt das Befehlskonvertierungsmodul das vom Benutzer initiierte Befehlsmuster nicht in einen Steuerbefehl zur Ansteuerung des Kopfstützenaktuators um.

Wie aus den voranstehenden Erläuterungen ersichtlich wird, bedarf es zur Ansteuerung der einzelnen Funktionalitäten des Sitz-/Liegemöbels bzw. dessen Aktuatoren lediglich Kenntnis über die vorgegebenen Befehlsmuster. Da die Anzahl zu betätigender Aktuatoren jedoch überschaubar ist, ist der Lernaufwand zur Erlernung der vorgegebenen Befehlsmuster gering. Gemäß einer Ausführungsform kann das Befehlserkennungsmodul jedoch eine Funktionalität aufweisen, die es ermöglicht, dem Befehlserkennungsmodul vorgegebene Befehlsmuster beizubringen, von denen ein jedes für einen Betätigungsmodus des zumindest einen Aktuators repräsentativ ist. Der Benutzer des Möbels kann sich somit seinerseits bestimmte vorgegebene Befehlsmuster einfallen lassen, so dass er sich nicht seinerseits an bestimmte Befehlsmuster anpassen bzw. gewöhnen muss.

Ferner kann das Befehlserkennungsmodul gemäß einer Ausführungsform eine "Teach-Funktionalität" aufweisen, die es dem Befehlserkennungsmodul ermöglicht, benutzerabhängige Eigenheiten bei der Initiierung von Befehlsmustern zu erkennen. Das Befehlserkennungsmodul kann somit gewisse Abweichungen von vorgegebenen Befehlsmustern erkennen, so dass Entsprechungen mit vorgegebenen Befehlsmustern selbst dann erkannt werden können, wenn vom Benutzer initiierte Befehlsmuster eine gewisse Abweichung von den vorgegebenen Befehlsmustern aufweisen.

Gemäß einem anderen Aspekt wird die der Erfindung zugrundeliegende Aufgabe ferner mit einem Sitz-/Liegemöbel mit den Merkmalen des Anspruchs 9 und insbesondere dadurch gelöst, dass das Sitz-/Liegemöbel eine Kommunikationseinheit umfasst, die vorzugsweise eine drahtlose Kommunikation mit dem Internet ermöglicht, wobei die Kommunikationseinheit eingerichtet ist, den Steuerbefehl zur Ansteuerung eines Infrastrukturgeräts an dasselbe zu übermitteln.

Im Unterschied zu herkömmlichen Sesseln verfügt das erfindungsgemäße Sitz-/Liegemöbel also nicht nur über eine Eingabeeinheit, mit der der Sessel selbst bzw. seine Funktionen angesteuert werden können; vielmehr verfügt das Sitz-/Liegemöbel erfindungsgemäß über eine Ausgabe- bzw. Kommunikationseinheit, beispielsweise einen WLAN-Adapter, über die Infrastrukturgeräte, die sich in der Umgebung des Sitz-/Liegemöbels oder an einem entfernten Ort befinden, unter Verwendung der Eingabeeinheit des Sitz-/Liegemöbels angesteuert werden können.

Insbesondere können beispielsweise Haustechnikeinrichtungen wie beispielsweise Rollläden, Lampen oder Klimageräte über die Kommunikationseinheit des Möbels unter Verwendung der Eingabeeinheit angesteuert werden. Es können jedoch auch andere Geräte in der Umgebung des erfindungsgemäßen Sitz-/Liegemöbels über die Kommunikationseinheit desselben angesteuert werden, wie beispielsweise Audio- und/oder Videogeräte (TV, Radio, HiFi, etc....).

Die Erfindung macht sich somit die ohnehin bereits vorhandene Eingabeeinheit eines Sitz-/Liegemöbels zunutze, indem diese um Funktionalitäten zur Steuerung von Geräten insbesondere in der Umgebung des Möbels erweitert wird. Das erfindungsgemäße Sitz-/Liegemöbel dient somit gewissermaßen als Steuerzentrale insbesondere für in der Umgebung des Möbels befindliche Infrastrukturgeräte, so dass der Benutzer des Möbels diese Geräte über das Sitz-/Liegemöbel als zentrale Ansteuereinheit bedienen kann, womit das Möbel dem Benutzer den größtmöglichen Komfort bietet.

Gemäß noch einem weiteren Aspekt wird die der Erfindung zugrundeliegende Aufgabe mit einem Sitz-/Liegemöbel gelöst, das sowohl die Merkmale des Sitz-/Liegemöbels gemäß Anspruch 1 als auch die Merkmale des Sitz-/Liegemöbels gemäß Anspruch 9 aufweist.

Im Folgenden werden nun bevorzugte Ausführungsformen des erfindungsgemäßen Sitz-/Liegemöbels erläutert, wobei sich weitere Ausführungsformen ferner aus den abhängigen Ansprüchen, der Figurenbeschreibung sowie den Zeichnungen ergeben.

So ist es gemäß einer Ausführungsform vorgesehen, dass die verschiedenen von einem Benutzer initiierten Befehlsmuster Sprachbefehle, Gestenbefehle und/oder taktile Befehlssequenzen, d.h. Befehlsfolgen, umfassen können. Um wieder das Beispiel der Kopfstützenverstellung aufzugreifen, kann also der Benutzer beispielsweise als Befehlsmuster den Sprachbefehl "Kopfstütze zurück" initiieren bzw. aussprechen, um die Kopfstütze nach hinten zu verstellen. Das Befehlserkennungsmodul überprüft daraufhin den vom Benutzer initiierten Sprachbefehl "Kopfstütze zurück" mit einem vorab abgespeicherten Befehlsmuster "Kopfstütze zurück". Wird hierbei eine Entsprechung festgestellt, so kann daraufhin das Befehlskonvertierungsmodul das Befehlsmuster "Kopfstütze zurück" in einen Steuerbefehl zur Ansteuerung des Kopfstützenaktuators umsetzen. Somit kann der Benutzer drahtlos mit dem Möbel kommunizieren, indem er Sprachbefehle zur Ansteuerung der manipulierbaren Komponenten initiiert bzw. ausspricht.

In entsprechender Weise kann eine Gestensteuerung unter Verwendung von Gestenbefehlen als Befehlsmuster erfolgen, indem das Befehlserkennungsmodul von einem Benutzer initiierte Gesten auf Entsprechungen mit vorgegebenen Gesten überprüft, von denen eine jede für einen Betätigungsmodus eines Aktuators repräsentativ ist. Wird hierbei wiederum eine Entsprechung mit einer vorgegebenen Geste erkannt, setzt anschließend das Befehlskonvertierungsmodul die Geste in einen Steuerbefehl zur Ansteuerung eines Aktuators um.

Die Steuerung durch Initiierung taktiler Befehlssequenzen erfolgt hingegen, indem vom Benutzer z.B. morsecodeähnliche Tastsequenzen initiiert werden. Beispielsweise kann eine taktile Befehlssequenz das vorgegebene Befehlsmuster "Kurz, Lang, Kurz" umfassen, wobei diese taktile Befehlssequenz beispielsweise für den Betätigungsmodus "Kopfstütze zurück" repräsentativ ist. Im Unterschied zu der Betätigung herkömmlicher drahtgebundener Fernbedienungen, bei denen die Betätigung der entsprechenden Tasten unmittelbar einen Steuerbefehl zur Ansteuerung des jeweiligen Aktuators auslöst und es somit keiner Befehlsmustererkennung bedarf, ist es erfindungsgemäß vorgesehen, die taktilen Befehlssequenzen zunächst mit vorgegebenen Befehlssequenzen abzugleichen, um eine Entscheidung dahingehend treffen zu können, ob und gegebenenfalls welcher Aktuator angesteuert und welcher Betätigungsmodus des jeweiligen Aktuators initiiert werden soll.

Gemäß einer Ausführungsform kann zur Erfassung von von einem Benutzer initiierten Sprachbefehlen zumindest ein Mikrofon vorgesehen sein. Vorzugsweise kann solch ein Mikrofon in das Sitz-/Liegemöbel und insbesondere in eine aktuatorisch manipulierbare Komponente desselben integriert sein, beispielsweise in ein Rückenteil, in eine Kopfstütze oder in eine Armlehne des Möbels. Zusätzlich oder alternativ hierzu kann jedoch auch ein Mikrofon zur Erfassung von Sprachbefehlen in einer separaten Bedieneinheit wie beispielsweise einem Smartphone vorgesehen sein, die bzw. das drahtlos, insbesondere via Bluetooth, mit dem Steuergerät kommuniziert.

Ist das Mikrofon Bestandteil des Möbels und beispielsweise in eine Kopfstütze integriert, kann der Benutzer des Möbels also einfach beispielsweise den Sprachbefehl "Kopfstütze zurück" aussprechen, woraufhin die Kopfstütze zurückgestellt wird, sofern das vorgegebene Sprachmuster erkannt wurde. In entsprechender Weise lässt sich die Kopfstütze durch Sprachbefehle beispielsweise über ein Smartphone ansteuern, indem dasselbe und insbesondere dessen Mikrofon zur Erfassung von Sprachbefehlen herangezogen wird.

Gemäß einer weiteren Ausführungsform, die als Ergänzung oder als Alternative in Frage kommt, kann zur Erfassung von von einem Benutzer initiierten Gestenbefehlen das Sitz-/Liegemöbel eine Kamera umfassen, die vorzugsweise in ein Rückenteil oder in eine Kopfstütze des Sitz-/Liegemöbels integriert ist. Zusätzlich oder alternativ hierzu kann zur Eingabe von Gesten eine Toucheinheit wie beispielsweise ein Touchpad oder ein Touchscreen vorgesehen sein, die in das Sitz-/Liegemöbel integriert ist oder Bestandteil einer separaten Bedieneinheit, beispielsweise eines Smartphones, sein kann, die drahtlos, insbesondere via Bluetooth oder Infrarot, mit dem Steuergerät kommuniziert. Beispielsweise kann ein Touchpad in eine Armlehne des Sitz-/Liegemöbels und insbesondere in dessen Polsterung oder Bezug integriert sein, so dass ein auf dem Möbel befindlicher Benutzer bequem Gesteneingaben in das Touchpad tätigen kann.

Gemäß einer weiteren Ausführungsform, die als Ergänzung oder als Alternative in Frage kommt, kann zur Erfassung von von einem Benutzer initiierten taktilen Befehlssequenzen das Sitz-/Liegemöbel zumindest einen druckempfindlichen Sensor umfassen, der vorzugsweise in das Sitzteil, das Rückenteil und/oder die Kopfstütze des Möbels integriert ist. Zur Verstellung der Kopfstütze kann also beispielsweise in dieselbe ein druckempfindlicher Sensor integriert sein, der eingerichtet ist, um von einem Benutzer initiierte taktile Befehlssequenzen zu erfassen. Beabsichtigt also beispielsweise ein Benutzer, die Kopfstütze nach hinten zu verstellen, so kann er z.B. entsprechend einem Morsecode beispielsweise die Befehlssequenz "Kurz, Lang, Kurz" initiieren, indem er mit seinem Hinterkopf einen kurzen Druckimpuls gefolgt von einem langanhaltenden Druckimpuls, der wiederum von einem kurzen Druckimpuls gefolgt wird, auf die Kopfstütze bzw. den darin befindlichen druckempfindlichen Sensor ausübt.

Vorteilhafterweise erfolgt die Ansteuerung der jeweiligen Aktuatoren durch taktile Befehlssequenzen, d.h. Befehlsfolgen, und nicht etwa durch taktile Einzelbefehle, da taktile Einzelbefehle wie beispielsweise ein einzelner Druckimpuls vom Benutzer versehentlich initiiert werden könnte, was eine entsprechende Manipulation des Sitzmöbels bzw. dessen Komponenten zur Folge hätte, obwohl der Benutzer solch eine Manipulation gar nicht beabsichtigt hatte.

Um einer unbeabsichtigten Manipulation des Sitz-/Liegemöbels vorzubeugen, kann es gemäß einer weiteren Ausführungsform vorgesehen sein, dass das Befehlserkennungsmodul eingerichtet ist, einen vorgegebenen Startbefehl mit einem von einem Benutzer initiierten Startbefehl zu vergleichen, der über zumindest eine der Befehlsmustererfassungseinheiten aus der Gruppe bestehend aus Mikrofon, Kamera, Toucheinheit und druckempfindlichem Sensor eingegeben wird. Die Befehlsmusterumsetzung durch das Befehlskonvertierungsmodul wird dabei nur dann aktiviert, wenn der von dem Benutzer initiierte Startbefehl dem vorgegebenen Startbefehl entspricht. Vorzugsweise kann es sich bei dem vorgegebenen Startbefehl um das Sprachmuster "Hi Molla" handeln, da "Hi" als Grußformel und "Molla" als Name des Möbels angesehen werden kann, durch den dasselbe angesprochen wird. Auch eine bestimmte Geste kann jedoch als Startbefehl verwendet werden.

Gemäß einer weiteren Ausführungsform kann das Sitz-/Liegemöbel ferner eine wiederaufladbare Batterie zur Versorgung der einzelnen elektrischen Verbraucher des Sitz-/Liegemöbels wie beispielsweise des zumindest einen Aktuators oder des Steuergeräts mit elektrischer Energie umfassen.

Gemäß einer weiteren Ausführungsform können ein Lautsprecher und/oder eine Anzeigeeinrichtung vorgesehen sein, über den/die das Sitz-/Liegemöbel bzw. dessen Steuergerät mit dem Benutzer kommunizieren kann. Wenn also beispielsweise von dem Befehlserkennungsmodul ein von einem Benutzer initiiertes Befehlsmuster nicht erkannt wurde, kann das Möbel dies dem Benutzer über den Lautsprecher und/oder die Anzeigeeinrichtung akustisch und/oder visuell mitteilen und ihn auffordern, das Befehlsmuster erneut zu initiieren.

Gemäß einer weiteren Ausführungsform kann es ferner vorgesehen sein, dass eine oder mehrere Komponenten, insbesondere die Fußstütze, eine Sicherheitseinrichtung aufweist, beispielweise in Form eines druckempfindlichen Sensors, der insbesondere beispielsweise als Leiste oder Platte ausgebildet und in die jeweilige Komponente integriert ist. Ein derartiger Sensor kann beispielweise ansprechen, wenn beim Verstellen der Komponente ein Widerstand bemerkt wird, der der Verstellbewegung entgegen wirkt. Wenn also beispielweise die sich einklappende Fußstütze einen Gegenstand, ein Haustier oder ein Körperteil des Benutzers einklemmt bzw. einzuklemmen droht, kann diese Gefahrensituation an das Steuergerät übermittelt werden, das daraufhin die Bewegung stoppt und insofern die Befehlsmuster-initiierte Ansteuerung der Aktuatoren unterbricht. Der Sicherheitseinrichtung wird somit eine höhere Priorität zugeordnet als der Befehlsmusterinitiierten Ansteuerung der Aktuatoren.

Gemäß einer weiteren Ausführungsform kann die Eingabeeinheit, über die sich auch Infrastrukturgeräte in der Umgebung des Sitz-/Liegemöbels ansteuern lassen, ein Steuergerät mit einem Befehlserkennungsmodul und einem Befehlskonvertierungsmodul umfassen, wobei in diesem Falle die in die Eingabeeinheit einzugebenden Befehle von einem Benutzer initiierte Befehlsmuster sein können, wie sie zuvor erläutert wurden. Das Befehlserkennungsmodul kann in diesem Falle eingerichtet sein, verschiedene von einem Benutzer initiierte Befehlsmuster auf Entsprechungen mit vorgegebenen Befehlsmustern zu überprüfen, von denen ein jedes für einen Betätigungsmodus eines Infrastrukturgeräts repräsentativ ist. Dementsprechend kann das Befehlskonvertierungsmodul eingerichtet sein, bei einer Entsprechung eines Befehlsmusters dasselbe in einen Steuerbefehl zur Ansteuerung des Infrastrukturgeräts umzusetzen.

Beabsichtigt ein Benutzer des Möbels also beispielsweise ein Klimagerät zu aktivieren, so kann er beispielsweise das Sprachbefehlsmuster "Klima ein" initiieren bzw. aussprechen, woraufhin das Befehlserkennungsmodul dieses Sprachmuster mit vorgegebenen Sprachmustern abgleicht. Stellt hierbei das Befehlserkennungsmodul eine Entsprechung mit dem vorgegebenen Befehlsmuster "Klima ein" fest, setzt das Befehlskonvertierungsmodul das Befehlsmuster in einen entsprechenden Steuerbefehl um, mit dem sich das Klimagerät aktivieren lässt. In entsprechender Weise lassen sich andere Infrastrukturgeräte wie beispielsweise Fernseher, Radios, Rollläden oder Lampen, um nur einige beispielhafte Infrastrukturgeräte zu nennen, über das Sitz-/Liegemöbel und insbesondere dessen speziell eingerichtete Eingabeeinheit durch Sprache, Gesten und/oder taktile Befehlssequenzen ansteuern.

Gemäß einer weiteren Ausführungsform kann das Sitz-/Liegemöbel ferner ein Diagnosemodul umfassen, das eingerichtet ist, eine Funktionsdiagnose des Sitz-/Liegemöbels durchzuführen. Wenn beispielsweise die freie Verstellbarkeit einer Komponente des Möbels durch einen Gegenstand blockiert ist, kann dies durch die Funktionsdiagnose festgestellt und dem Benutzer eine Maßnahme vorgeschlagen werden, die der Funktionsdiagnose Rechnung trägt.

Gemäß einer weiteren Ausführungsform kann das Diagnosemodul ferner eingerichtet sein, die Funktionsdiagnose selbsttätig und/oder auf Befehl eines Benutzers zu starten. Beispielsweise kann die Funktionsdiagnose nach Ablauf vorbestimmter Zeitintervalle oder nach einer bestimmten Anzahl von Bewegungszyklen der Aktuatoren gestartet werden. Stellt hingegen der Benutzer des Möbels fest, dass irgendeine Funktion des Möbels nicht einwandfrei funktioniert, kann er auch seinerseits die Funktionsdiagnose aktiv starten, um eine etwaige Abhilfemaßnahme vorgeschlagen zu bekommen.

Gemäß einer weiteren Ausführungsform kann das Befehlserkennungsmodul eingerichtet sein, ein von einem Benutzer initiiertes Befehlsmuster mit einem vorgegebenen, für den Start der Funktionsdiagnose repräsentativen Befehlsmuster auf Entsprechungen zu überprüfen, wobei das Befehlskonvertierungsmodul eingerichtet ist, bei einer Entsprechung des Befehlsmusters dasselbe in einen Startbefehl zum Starten der Funktionsdiagnose umzusetzen. Beispielsweise kann der Benutzer das Befehlsmuster "Funktionsdiagnose" initiieren bzw. aussprechen, wenn er feststellt, dass irgendeine Funktion des Möbels nicht einwandfrei funktioniert. Wird das Befehlsmuster "Funktionsdiagnose", das von dem Benutzer initiiert wurde, von dem Befehlserkennungsmodul erkannt, wird daraufhin von dem Befehlskonvertierungsmodul ein entsprechender Startbefehl zum Starten der Funktionsdiagnose erzeugt.

Gemäß noch einer weiteren Ausführungsform kann das Diagnosemodul ferner eingerichtet sein, eine Maßnahme zu ermitteln, die dem Diagnoseergebnis der Funktionsdiagnose Rechnung trägt, und/oder das Diagnoseergebnis der Funktionsdiagnose über die Kommunikationseinheit an eine entfernte Entität zu senden. Bei der entfernten Entität kann es sich beispielsweise um ein Servicezentrum des Herstellers des Möbels handeln, welches bei Erhalt der Funktionsdiagnose seinerseits eine Maßnahme ermitteln kann, die dem Diagnoseergebnis der Funktionsdiagnose Rechnung trägt, wobei diese von der entfernten Entität ermittelte Maßnahme dann von der Kommunikationseinheit empfangen werden kann.

Das Sitz-/Liegemöbel kann somit über die Kommunikationseinheit nicht nur mit Infrastrukturgeräten in der unmittelbaren Umgebung, sondern auch mit entfernten Entitäten beispielsweise über das Internet kommunizieren, so dass bei Bedarf auch eine Ferndiagnose des Möbels über die Kommunikationseinheit möglich wird. Wird bei solch einer Ferndiagnose beispielsweise festgestellt, dass eine Reparatur oder ein Austausch eines Teils des Möbels erforderlich ist, kann das Servicezentrum beispielsweise einen Termin mit einem Servicetechniker zur Reparatur des Möbels arrangieren oder ein Austauschteil verschicken.

Im Folgenden wird das erfindungsgemäße Sitz-/Liegemöbel nun unter Bezugnahme auf die Figuren rein beispielhaft beschrieben, wobei:
- Fig. 1: eine Wohnraumsituation mit einem erfindungsgemäßen Sitz-/Liegemöbel veranschaulicht;
- Fig. 2: verschiedene Module des erfindungsgemäßen Sitz-/Liegemöbels veranschaulicht; und
- Fig. 3: ein beispielhaftes Steuergerät eines erfindungsgemäßen Sitz-/Liegemöbels veranschaulicht.

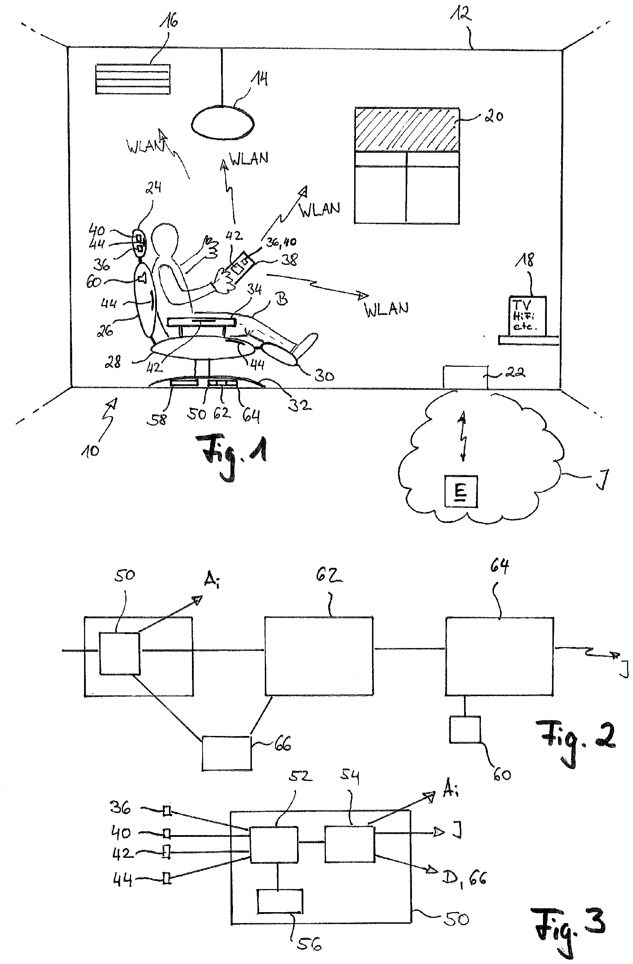

Die Fig. 1 zeigt eine Wohnraumsituation mit einem erfindungsgemäßen Sitz-/Liegemöbel 10 in einem Wohnraum 12. Der Wohnraum 12 ist mit verschiedenen Infrastrukturgeräten wie beispielsweise einer Lampe 14, einem Klimagerät 16, einem Entertainmentgerät 18 (TV, Radio, HiFi, etc., ...) und einem elektrischen Rollladen 20 ausgestattet. Ferner ist ein Router 22 vorhanden, über den eine Verbindung mit dem Internet I hergestellt werden kann, um mit entfernten Entitäten E kommunizieren und so Daten austauschen zu können.

Das Sitz-/Liegemöbel 10, nachfolgend auch nur als Möbel 10 bezeichnet, weist einen Standfuß 32 auf, mit dem das Möbel 10 auf dem Fußboden des Wohnraums 12 aufsteht. An dem Standfuß 32 ist ein Sitzteil 28 befestigt, an dem ein als Rückenlehne dienendes Rückenteil 26 und eine Fußstütze 30 angelenkt sind. An dem Rückenteil 26 ist wiederum eine Kopfstütze 24 angelenkt. Ferner weist das Möbel 10 Armlehnen 34 auf, die beispielweise an dem Sitzteil 28 befestigt sein können. Die Position des Sitzteils 28 ist gegenüber dem Standfuß 32 veränderbar und gleichermaßen ist die Position des Rückenteils 26 gegenüber dem Sitzteil 28 und die Position der Fußstütze 30 gegenüber dem Sitzteil 28 veränderbar, wie auch die Position der Kopfstütze 24 gegenüber dem Rückenteil 26 veränderbar ist. Auch die Position der Armlehnen 34 kann gegenüber den Sitzteil 28 verändert werden.

Um die Position dieser Komponenten 24, 26, 28, 30, 34 verstellen zu können, sind entsprechende Aktuatoren wie beispielsweise Servomotoren und/oder Kolbenzylindereinheiten vorgesehen, die hier der Übersichtlichkeit halber jedoch nicht dargestellt sind. Darüber hinaus kann das Möbel 10 beispielsweise in das Rückenteil 26 integrierte Aktuatoren aufweisen, durch deren Betätigung das Rückenteil 26 zu Massagezwecken manipuliert werden kann.

Üblicherweise werden derartige Aktuatoren mittels einer drahtgebundenen Fernbedienung gesteuert, wozu die Fernbedienung mehrere Tasten zur Ansteuerung der jeweiligen Aktuatoren aufweist. Im Unterschied hierzu ist es erfindungsgemäß vorgesehen, die in Rede stehenden Aktuatoren durch Befehlsmuster anzusteuern, welche von einem Benutzer B initiiert werden, der in der dargestellten Wohnraumsituation auf dem Möbel 10 sitzt. Derartige Befehlsmuster können beispielsweise Sprachbefehle, Gestenbefehle und/oder taktile Befehlssequenzen sein, die der Benutzer B initiiert.

Zur Erfassung von Sprachbefehlen, die von dem Benutzer B initiiert werden, weist das Möbel 10 ein Mikrofon 36 auf, das in der hier dargestellten Ausführungsform in die verstellbare Kopfstütze 24 integriert ist. Das Mikrofon 36 kann jedoch auch beispielsweise in die Armlehne 34 integriert oder Bestandteil einer separaten Bedieneinheit 38 sein, bei der es sich in der hier dargestellten Ausführungsform um ein Smartphone handelt, das der Benutzer B in der Hand hält und über Bluetooth mit dem Steuergerät 50 des Möbels 10 kommuniziert, auf das nachfolgend noch genauer eingegangen wird.

In der hier dargestellten Ausführungsform weist das Sitzmöbel 10 ferner eine Kamera 40 auf, die hier ebenfalls in die Kopfstütze 24 integriert ist. Mittels dieser Kamera 40 ist das Sitzmöbel 10 in der Lage, Gestenbefehle zu erfassen, die der Benutzer B beispielweise mit den Händen zur Ansteuerung der einzelnen Aktuatoren initiiert, indem er z.B. mit seiner rechten Hand in der Luft ein bestimmtes Bewegungsmuster ausführt, welches von der Kamera 40 erkannt wird. Zur Erfassung von Gestenbefehlen ist es bei der hier dargestellten Ausführungsform ferner vorgesehen, dass das Smartphone 38 eine Toucheinheit 42 in Form eines Touchscreens aufweist, mittels derer Gestenbefehle in Form von Wischgesten zur Ansteuerung der einzelnen Aktuatoren erfasst werden können. Ferner ist eine entsprechende Toucheinheit 42 in eine der Armlehnen 34 integriert, so dass der Benutzer B auch über diese Toucheinheit 42 entsprechende Wischgestenbefehle eingeben kann.

Des Weiteren ist es bei der hier dargestellten Ausführungsform vorgesehen, dass das Sitzmöbel 10 druckempfindliche Sensoren 44 aufweist, welche hier in die Kopfstütze 24, in das Rückenteil 26 und in das Sitzteil 28 integriert sind. Über diese druckempfindliche Sensoren 24 können vom Benutzer B initiierte, morsecodeähnliche Tastsequenzen zur Ansteuerung der einzelnen Aktuatoren erfasst werden. Beispielsweise kann der Benutzer B eine Kurz-Lang-Kurz-Tastsequenz zur Verstellung der Kopfstütze 24 nach hinten initiieren, indem er mit seinem Hinterkopf in entsprechender Weise den druckempfindlichen Sensor 24 in der Kopfstütze 24 erst kurz, dann lang und noch einmal kurz beaufschlagt. Alternativ oder zusätzlich kann z.B. in das Sitzteil 28 oder in die Fußstütze 30 ein druckempfindlicher Sensor integriert sein, den der Benutzer B mit einem seiner Oberschenkel oder Unterschenkel beaufschlagt, um einen Befehl zu erteilen.

Die auf diese Weise von den Befehlsmustererfassungseinheiten 36, 40, 42, 44 erfassten Befehlsmuster werden anschließend an das Steuergerät 50 des Möbels 10 übermittelt (siehe Fig. 2 und 3). Das Steuergerät 50 umfasst ein Befehlserkennungsmodul 52, ein Befehlskonvertierungsmodul 54 sowie einen Speicher 56. Das Befehlserkennungsmodul 52 ist dabei eingerichtet, Befehlsmuster, die von dem Benutzer B initiiert und unter Verwendung der Befehlsmustererfassungseinheiten 36, 40, 42, 44 erfasst wurden, auf Entsprechungen mit vorgegebenen Befehlsmustern zu überprüfen, die in dem Speicher 56 hinterlegt sind. Jedes der in dem Speicher 56 hinterlegten Befehlsmuster ist dabei für einen Betätigungsmodus eines Aktuators des Möbels 10 repräsentativ. Wird von dem Befehlserkennungsmodul 52 eine Entsprechung zwischen einem vom Benutzer B initiierten Befehlsmuster und einem vorgegebenen Befehlsmuster aus dem Speicher 56 festgestellt, so wird das entsprechende Befehlsmuster an das Befehlskonvertierungsmodul 54 übermittelt, welches das Befehlsmuster in einen entsprechenden Steuerbefehl zur Ansteuerung des jeweiligen Aktuators umsetzt.

Wenn der Benutzer B also beispielsweise das Sprachbefehlsmuster "Kopfstütze zurück" initiiert bzw. ausspricht, so wird dieses Befehlsmuster von dem Mikrofon 36 erfasst und von dem Befehlserkennungsmodul 52 auf Entsprechungen mit einem vorgegebenen Befehlsmuster aus dem Speicher 56 überprüft. Wird hierbei eine Entsprechung festgestellt, so wird hieraufhin von dem Befehlskonvertierungsmodul 54 das Sprachbefehlsmuster "Kopfstütze zurück" in einen entsprechenden Steuerbefehl umgesetzt, der dann an den Aktuator zum Verstellen der Kopfstütze übermittelt wird.

Damit über die Befehlsmustererfassungseinheiten 36, 40, 42, 44 keine unbewusst vom Benutzer B initiierten Befehlsmuster erfasst werden können, kann in dem Speicher 56 ferner ein vorgegebener Startbefehl hinterlegt sein, der mit einem von Benutzer initiierten Startbefehl abgeglichen werden kann. Hierbei wird die Befehlsmusterumsetzung des Befehlskonvertierungsmoduls 54 nur dann aktiviert, wenn der von dem Benutzer B initiierte Startbefehl dem vorgegebenen Startbefehl aus dem Speicher 56 entspricht. Beispielsweise kann der vorgegebene Startbefehl dem Sprachmuster "Hi Molla" entsprechen, so dass die Befehlsmusterumsetzung durch das Befehlskonvertierungsmodul nur dann aktiviert wird, wenn der Benutzer als Startbefehl das Sprachmuster "Hi Molla" korrekt ausspricht bzw. initiiert.

Wie sich wiederum der Fig. 1 entnehmen lässt, kann das erfindungsgemäße Möbel 10 ferner eine wiederaufladbare Batterie zur Versorgung der elektrischen Verbraucher des Möbels 10 wie beispielsweise der Aktuatoren oder des Steuergeräts 50 mit elektrischer Energie umfassen. Bei der hier dargestellten Ausführungsform ist die wiederaufladbare Batterie 58 in den Standfuß 32 des Möbels integriert, wobei die Batterie 58 selbstverständlich auch in einer anderen Komponente des Möbels 10 untergebracht sein kann. Beispielweise kann solch eine Batterie auch zum Teil derart in das Rückenteil 26 integriert sein, dass die Batterie von hinten in eine entsprechende Aufnahme in das Rückenteil 26 eingesteckt werden kann, wobei sie im eingesteckten Zustand von außen frei zugänglich und als Design-Merkmal sichtbar ist.

Des Weiteren ist bei der hier dargestellten Ausführungsform ein Lautsprecher 60 in die Kopfstütze 24 integriert, so dass das Möbel 10 bzw. das Steuergerät 50 mit dem Benutzer B über den Lautsprecher 60 kommunizieren kann. Beispielsweise kann das Steuergerät 50 dem Benutzer B über den Lautsprecher 60 mitteilen, wenn ein von dem Benutzer B initiiertes Befehlsmuster von dem Befehlserkennungsmodul 52 nicht erkannt werden konnte, so dass der Benutzer B weiß, dass er das fragliche Befehlsmuster erneut initiieren muss.

Wie der Fig. 1 in Verbindung mit der Fig. 2 ferner entnommen werden kann, kann das Möbel 10 ferner eine Verarbeitungseinheit 62 und eine Kommunikationseinheit 64 umfassen. Die Verarbeitungseinheit 62 ist dabei eingerichtet, von einem Benutzer eingegebene Befehle in Steuerbefehle zur Ansteuerung eines der Infrastrukturgeräte 14, 16, 18, 20 umzusetzen, wohingegen die Kommunikationseinheit 64, bei der es sich beispielsweise um einen WLAN-Adapter handeln kann, dazu dient, den Steuerbefehl zur Ansteuerung eines der Infrastrukturgeräte 14, 16, 18, 20 über den Router 22 an das jeweilige Infrastrukturgerät 14, 16, 18, 20 zu übermitteln.

Zwar könnten entsprechende Befehle von dem Benutzer B über eine herkömmliche Eingabeeinheit wie beispielsweise eine drahtgebundene Fernbedienung eingegeben werden; erfindungsgemäß ist es jedoch vorgesehen, das Steuergerät 50 mit dem Befehlserkennungsmodul 52 und dem Befehlskonvertierungsmodul 54 zur Befehlsmusterverarbeitung zu verwenden. Der Benutzer B kann somit die Infrastrukturgeräte 14, 16, 18, 20 durch Sprachbefehle, Gestenbefehle und/oder taktile Befehlssequenzen ansteuern, wozu wiederum in dem Speicher 56 entsprechende vorgegebene Befehlsmuster abgelegt sind, von denen ein jedes für einen Betriebs- oder Betätigungsmodus eines der Infrastrukturgeräte 14, 16, 18, 20 repräsentativ ist. Wird nach Eingabe eines entsprechenden Befehlsmusters durch den Benutzer B wie beispielsweise eines Gestenbefehls von dem Befehlserkennungsmodul 52 festgestellt, dass das eingegebene Gestenmuster mit einem vorgegebenen Gestenmuster übereinstimmt, so wird dieses Gestenmuster von dem Befehlskonvertierungsmodul 54 in einen entsprechenden Steuerbefehl zur Ansteuerung des Infrastrukturgeräts 14, 16, 18, 20 umgesetzt. Ein auf diese Art und Weise generierter Steuerbefehl zur Ansteuerung eines der Infrastrukturgeräte 14, 16, 18, 20 wird dann von der Verarbeitungseinheit 62 zur Ausgabe von der Kommunikationseinheit 64 weiter verarbeitet, so dass die Kommunikationseinheit 64 den aufbereiteten Steuerbefehl über den Router 22 an das jeweilige Infrastrukturgerät 14, 16, 18, 20 zur Ansteuerung desselben übertragen kann.

Das Möbel 10 dient somit gewissermaßen als Steuerzentrale für die von ihm ansteuerbaren Infrastrukturgeräte 14, 16, 18, 20, da der Benutzer B über die ohnehin vorhandenen Funktionalitäten des Möbels 10 die einzelnen Infrastrukturgeräte 14, 16, 18, 20 ansteuern kann.

Wie der Fig. 2 ferner entnommen werden kann, kommuniziert das Steuergerät 50 außerdem mit einem Diagnosemodul 66, mittels dessen sich eine Funktionsdiagnose des Möbels 10 durchführen lässt. Beispielsweise kann eine derartige Funktionsdiagnose von dem Benutzer B getriggert werden, indem er ein Startbefehlsmuster zur Ausführung der Funktionsdiagnose initiiert. Beispielsweise kann der Benutzer B mit dem Sprachbefehlsmuster "Funktionsdiagnose" eine Funktionsdiagnose auslösen, wozu von dem Befehlserkennungsmodul 52 das Startbefehlsmuster jedoch erkannt, d.h. als einem vorgegebenen Startbefehlsmuster entsprechend erkannt werden muss. Wird solch eine Entsprechung mit einem vorgegebenen Startbefehlsmuster erkannt, kann anschließend das Befehlskonvertierungsmodul 54 das Startbefehlsmuster in einen Startbefehl zum Starten der Funktionsdiagnose umsetzen, woraufhin die Funktionsdiagnose durchgeführt wird.

Das Funktionsdiagnosemodul 66 kann ferner über eine Funktionalität verfügen, mittels derer sich eine Maßnahme ermitteln lässt, welche geeignet ist, dem Diagnoseergebnis der Funktionsdiagnose Rechnung zu tragen. Zusätzlich oder alternativ hierzu kann das Diagnoseergebnis der Funktionsdiagnose über die Kommunikationseinheit 64 über das Internet I an eine entfernte Entität E wie beispielsweise ein Servicezentrum des Herstellers des Möbels 10 übermittelt werden, welches hieraufhin seinerseits eine Maßnahme ermittelt, mit der dem Diagnoseergebnis der Funktionsdiagnose Rechnung getragen werden kann. Diese Maßnahme kann dann wiederum über das Internet I und die Kommunikationseinheit 64 an das Möbel 10 übertragen und dem Benutzer B beispielsweise über den Lautsprecher 60 zur Kenntnis gebracht werden, so dass der Benutzer B entsprechende Maßnahmen vornehmen kann.

### Bezugszeichenliste

- 10: Sitz-/Liegemöbel
- 12: Wohnraum
- 14: Lampe
- 16: Klimagerät
- 18: Entertainmentgerät
- 20: Rollladen
- 22: Router
- 24: Kopfstütze
- 26: Rückenteil
- 28: Sitzteil
- 30: Fußstütze
- 32: Standfuß
- 34: Armlehne
- 36: Mikro, Befehlsmustererfassungseinheit
- 38: Bedieneinheit/Smartphone
- 40: Kamera, Befehlsmustererfassungseinheit
- 42: Toucheinheit/Touchscreen/Touchpad, Befehlsmustererfassungseinheit
- 44: druckempfindlicher Sensor, Befehlsmustererfassungseinheit
- 50: Steuergerät
- 52: Befehlserkennungsmodul
- 54: Befehlskonvertierungsmodul
- 56: Speicher
- 58: wiederaufladbare Batterie
- 60: Lautsprecher
- 62: Verarbeitungseinheit
- 64: Kommunikationseinheit
- 66: Diagnosemodul

- Aᵢ: Aktuatoren
- E: Entität, Servicezentrum
- I: Internet
- B: Benutzer
- D: Diagnose

## Patentansprüche

1. Sitz-/Liegemöbel (10), insbesondere Sessel oder Sitzgruppe mit mehreren Sitzeinheiten,
mit zumindest einer mittels eines Aktuators manipulierbaren Komponente (24, 26, 28, 30, 34), insbesondere aus der Gruppe von manipulierbaren Komponenten bestehend aus aktuatorisch verstellbarem Sitzteil (28), aktuatorisch verstellbarem Rückenteil (26), aktuatorisch verstellbarer Kopfstütze (24), aktuatorisch verstellbarer Fußstütze (30) und aktuatorisch verstellbarer Armlehne (34), und
mit einem Steuergerät (50) zur Ansteuerung des zumindest einen Aktuators, wobei das Steuergerät (50)
ein Befehlserkennungsmodul (52), das eingerichtet ist, verschiedene von einem Benutzer (B) initiierte Befehlsmuster auf Entsprechungen mit vorgegebenen Befehlsmustern zu überprüfen, von denen ein jedes für einen Betätigungsmodus des zumindest einen Aktuators repräsentativ ist, und
ein Befehlskonvertierungsmodul (54) umfasst, das eingerichtet ist, bei einer Entsprechung eines Befehlsmusters dasselbe in einen Steuerbefehl zur Ansteuerung des zumindest einen Aktuators umzusetzen.

2. Sitz-/Liegemöbel nach Anspruch 1,
**dadurch gekennzeichnet, dass**
die verschiedenen von einem Benutzer (B) initiierten Befehlsmuster Sprachbefehle, Gestenbefehle und/oder taktile Befehlssequenzen umfassen.

3. Sitz-/Liegemöbel nach Anspruch 2,
**dadurch gekennzeichnet, dass** zur Erfassung von von einem Benutzer (B) initiierten Sprachbefehlen zumindest ein Mikrofon (36) vorgesehen ist,
das in das Sitz-/Liegemöbel (10), bevorzugt in die zumindest eine aktuatorisch manipulierbare Komponente (24, 26, 28, 30, 34) des Sitz-/Liegemöbels (10), integriert ist, insbesondere in ein Rückenteil (26) oder in eine Kopfstütze (24), oder
das Bestandteil einer separaten Bedieneinheit (38) ist, insbesondere eines Smartphones, die drahtlos, insbesondere via Bluetooth oder Infrarot, mit dem Steuergerät (50) kommuniziert.

4. Sitz-/Liegemöbel nach Anspruch 2 oder 3,
**dadurch gekennzeichnet, dass**
zur Erfassung von von einem Benutzer (B) initiierten Gestenbefehlen das Sitz-/Liegemöbel (10) eine Kamera (40) umfasst, die vorzugsweise in ein Rückenteil (26) oder in eine Kopfstütze (24) des Sitz-/Liegemöbels (10) integriert ist, und/oder
eine Toucheinheit (42) vorgesehen ist, die in das Sitz-/Liegemöbel (10), vorzugsweise in eine Armlehne (34) des Sitz-/Liegemöbels (10), integriert ist oder Bestandteil einer separaten Bedieneinheit (38) ist, insbesondere eines Smartphones, die drahtlos, insbesondere via Bluetooth oder Infrarot, mit dem Steuergerät (50) kommuniziert.

5. Sitz-/Liegemöbel nach zumindest einem der Ansprüche 2 bis 4,
**dadurch gekennzeichnet, dass**
zur Erfassung von von einem Benutzer (B) initiierten taktilen Befehlssequenzen das Sitz-/Liegemöbel (10) zumindest einen druckempfindlichen Sensor (44) umfasst, der vorzugsweise in das Sitzteil (28), das Rückenteil (26) und/oder eine Kopfstütze (24) des Sitz-/Liegemöbels (10) integriert ist.

6. Sitz-/Liegemöbel nach zumindest einem der Ansprüche 2 bis 5,
**dadurch gekennzeichnet, dass**
das Befehlserkennungsmodul (52) eingerichtet ist, einen vorgegebenen Startbefehl mit einem von einem Benutzer (B) initiierten Startbefehl zu vergleichen, der über zumindest eine der Befehlsmustererfassungseinheiten aus der Gruppe bestehend aus Mikrofon (36), Kamera (40), Toucheinheit (42) und druckempfindlichem Sensor (44) eingegeben wird, wobei die Befehlsmusterumsetzung des Befehlskonvertierungsmoduls (52) nur aktiviert wird, wenn der von dem Benutzer (B) initiierte Startbefehl dem vorgegebenen Startbefehl entspricht, wobei vorzugsweise der vorgegebene Startbefehl dem Sprachmuster "Hi Molla" entspricht.

7. Sitz-/Liegemöbel nach zumindest einem der voranstehenden Ansprüche,
**dadurch gekennzeichnet, dass**
das Sitz-/Liegemöbel (10) ferner eine wiederaufladbare Batterie (58) zur Versorgung der elektrischen Verbraucher des Sitz-/Liegemöbels (10) wie beispielsweise des zumindest einen Aktuators oder des Steuergeräts (50) mit elektrischer Energie umfasst.

8. Sitz-/Liegemöbel nach zumindest einem der voranstehenden Ansprüche,
**dadurch gekennzeichnet, dass**
ein Lautsprecher (60) und/oder eine Anzeigeeinrichtung vorgesehen sind, über den/die das Sitz-/Liegemöbel (10) mit einem Benutzer (B) kommuniziert.

9. Sitz-/Liegemöbel (10), insbesondere Sessel oder Sitzgruppe mit mehreren Sitzeinheiten,
mit einer Eingabeeinheit zur Eingabe von Befehlen, von denen ein jeder für einen Betriebs- oder Betätigungsmodus eines Infrastrukturgeräts (14, 16, 18, 20) repräsentativ ist,
mit einer Verarbeitungseinheit, welche eingerichtet ist, in die Eingabeeinheit eingegebene Befehle in Steuerbefehle zur Ansteuerung des Infrastrukturgeräts (14, 16, 18, 20) umzusetzen, und
mit einer Kommunikationseinheit (64), die vorzugsweise eine drahtlose Kommunikation mit dem Internet (I) ermöglicht, wobei die Kommunikationseinheit (64) eingerichtet ist, einen oder mehrere Steuerbefehle zur Ansteuerung des Infrastrukturgeräts (14, 16, 18, 20) an das Infrastrukturgerät (14, 16, 18, 20) zu übermitteln.

10. Sitz-/Liegemöbel nach Anspruch 9,
**dadurch gekennzeichnet, dass**
die Eingabeeinheit ein Steuergerät (50) mit einem Befehlserkennungsmodul (52) und einem Befehlskonvertierungsmodul (54) umfasst und dass die Befehle von einem Benutzer (B) initiierte Befehlsmuster sind, wobei das Befehlserkennungsmodul (52) eingerichtet ist, verschiedene von einem Benutzer (B) initiierte Befehlsmuster auf Entsprechungen mit vorgegebenen Befehlsmustern zu überprüfen, von denen ein jedes für einen Betätigungsmodus eines Infrastrukturgeräts (14, 16, 18, 20) repräsentativ ist, und wobei das Befehlskonvertierungsmodul (54) eingerichtet ist, bei einer Entsprechung eines Befehlsmusters dasselbe in einen Steuerbefehl zur Ansteuerung des Infrastrukturgeräts (14, 16, 18, 20) umzusetzen.

11. Sitz-/Liegemöbel nach Anspruch 9 oder 10,
**dadurch gekennzeichnet, dass**
das Sitz-/Liegemöbel (10) ferner ein Diagnosemodul (66) umfasst, das eingerichtet ist, eine Funktionsdiagnose des Sitz-/Liegemöbels (10) durchzuführen.

12. Sitz-/Liegemöbel nach Anspruch 11,
**dadurch gekennzeichnet, dass**
das Diagnosemodul (66) eingerichtet ist, die Funktionsdiagnose selbsttätig und/oder auf Befehl eines Benutzers (B) zu starten.

13. Sitz-/Liegemöbel nach Anspruch 11 oder 12,
**dadurch gekennzeichnet, dass**
das Befehlserkennungsmodul (52) eingerichtet ist, ein von einem Benutzer (B) initiiertes Befehlsmuster mit einem vorgegebenen, für den Start der Funktionsdiagnose repräsentativen Befehlsmuster auf Entsprechungen zu überprüfen, und das Befehlskonvertierungsmodul (54) eingerichtet ist, bei einer Entsprechung des Befehlsmusters dasselbe in einen Startbefehl zum Starten der Funktionsdiagnose umzusetzen.

14. Sitz-/Liegemöbel nach zumindest einem der Ansprüche 11 bis 13,
**dadurch gekennzeichnet, dass**
das Diagnosemodul (66) ferner eingerichtet ist, eine Maßnahme zu ermitteln, die dem Diagnoseergebnis der Funktionsdiagnose Rechnung trägt, und/oder das Diagnoseergebnis der Funktionsdiagnose über die Kommunikationseinheit (64) an eine entfernte Entität zu senden, die eine Maßnahme ermittelt, die dem Diagnoseergebnis der Funktionsdiagnose Rechnung trägt, und die von dieser Entität ermittelte Maßnahme über die Kommunikationseinheit (64) zu empfangen.

15. Sitz-/Liegemöbel (10) mit den Merkmalen zumindest eines der Ansprüche 1 bis 8 und zumindest eines der Ansprüche 9 bis 14.
